# EUROPÄISCHE PATENTSCHRIFT

(11) **EP 3 303 195 B1**
(45) Veröffentlichungstag und Bekanntmachung des Hinweises auf die Patenterteilung: **03.03.2021**
(21) Anmeldenummer: 16717647.8
(22) Anmeldetag: 21.04.2016
(51) Int. Cl.: B65G 47/08, B65G 47/244, B65G 47/68

(54) **VORRICHTUNG UND VERFAHREN ZUM HERSTELLEN EINES DEFINIERTEN LAGENBILDES AUS MEHREREN STÜCKGÜTERN**
DEVICE AND METHOD FOR PRODUCING A DEFINED LAYER PATTERN FROM A PLURALITY OF PIECE GOODS
DISPOSITIF ET PROCÉDÉ PERMETTANT DE PRODUIRE UNE FORMATION EN COUCHES DÉFINIE COMPOSÉE DE PLUSIEURS COLIS DE DÉTAIL

(30) Priorität: 02.06.2015 DE 102015210185
(43) Veröffentlichungstag der Anmeldung: 11.04.2018
(73) Patentinhaber: Krones Aktiengesellschaft, 93073 Neutraubling (DE)
(72) Erfinder: BEER, Erhard, 93073 Neutraubling (DE); OSTERHAMMER, Martin, 93073 Neutraubling (DE); ESCHLBECK, Richard, 93073 Neutraubling (DE)
(74) Vertreter: Benninger, Johannes
(86) Internationale Anmeldenummer: PCT/EP2016/058923
(87) Internationale Veröffentlichungsnummer: WO 2016/192897

(56) Entgegenhaltungen:
- EP-A1- 2 135 825
- EP-A1- 2 135 825
- EP-A1- 2 208 695
- EP-A1- 2 208 695
- EP-A1- 2 727 689
- EP-A1- 2 727 689
- WO-A1-2010/106529
- WO-A1-2010/106529
- DE-A1-102013 203 242
- DE-A1-102013 204 095
- DE-A1-102013 204 095

## Beschreibung

Die vorliegende Erfindung betrifft eine Vorrichtung und ein Verfahren zum Herstellen eines definierten Lagenbildes aus mehreren Stückgütern.

Im Bereich der Pack- und Palettiertechnik sind Vorrichtungen und Verfahren notwendig, um Gebinde bzw. Stückgüter in eine bestimmte Ausrichtung zu bringen, bevor diese auf einer Palette platziert werden. Häufig werden die jeweiligen Gebinde bzw. Stückgüter hierzu mittels eines Zuführbandes in Richtung einer Handhabungseinrichtung geführt, welche die Gebinde bzw. Stückgüter ggf. greifen kann und in die entsprechende relative Orientierung und Position gegenüber weiteren Gebinden bzw. Stückgütern bringt. Die Gebinde können eine Mehrzahl von Behältnissen umfassen, die ggf. durch Schrumpffolie zum jeweiligen Gebinde zusammengefasst sind und nach Ausbilden der palettierfähigen Lage auf einer Palette abgesetzt werden.

Die Praxis hat hierbei gezeigt, dass derartige Handhabungseinrichtungen ab einem gewissen Durchsatz an ihre Leistungsgrenze gelangen. Sind mehrere Handhabungseinrichtungen vorgesehen, um den Durchsatz zu erhöhen, so besitzen diese Vorrichtungen große Dimensionen, welche in der Praxis jedoch unerwünscht sind, um entsprechende Vorrichtungen auch bei kleinem zur Verfügung stehendem Raum installieren zu können. Eine Vorrichtung nach dem Oberbegriff des Anspruchs 1 ist aus DE 10 2013 203242 A1 bekannt.

Eine Aufgabe der Erfindung kann aus diesem Grunde darin gesehen werden, eine Vorrichtung und ein Verfahren zum Herstellen eines definierten Lagenbildes aus mehreren Stückgütern zur Verfügung zu stellen, die sich durch einen hohen Durchsatz auszeichnen und darüber hinaus möglichst platzsparend ausgebildet sind bzw. umgesetzt werden können.

Die obigen Aufgaben werden durch eine Vorrichtung und ein Verfahren gelöst, welche die Merkmale in den Patentansprüchen 1 und 11 umfassen. Weitere vorteilhafte Ausgestaltungen werden durch die Unteransprüche beschrieben.

Die Erfindung betrifft eine Vorrichtung zum Herstellen eines definierten Lagenbildes aus mehreren Stückgütern. Die Stückgüter können durch Gebinde aus einer Mehrzahl von Behältnissen, wie beispielsweise PET-Flaschen, ausgebildet sein.

Vorgesehen sind wenigstens zwei Horizontalfördereinrichtungen, die jeweils Stückgüter bzw. Gebinde transportieren können und parallel zueinander orientierte Förderrichtungen besitzen. Beispielsweise können die wenigstens zwei Horizontalfördereinrichtungen nicht direkt aneinander angrenzen, so dass zwischen direkt benachbarten Horizontalfördereinrichtungen bzw. entlang ihrer Förderstrecke ein bestimmter Abstand ausgebildet ist. Insbesondere können die wenigstens zwei Horizontalfördereinrichtungen durch umlaufende Transportbänder ausgebildet sein, auf welchen die Stückgüter bzw. Gebinde während ihrer Bewegung durch die wenigstens zwei Horizontalfördereinrichtungen aufstehen.

Auch ist mindestens ein den wenigstens zwei Horizontalfördereinrichtungen in Förderrichtung nachgeordnetes Formierungsband mit einer Transportrichtung vorgesehen, die parallel zu den Förderrichtungen orientiert ist. Das mindestens eine Formierungsband kann wenigstens einen Mattenkettenförderer umfassen.

Zudem sind mehrere Arbeitssysteme vorgesehen, die via die wenigstens zwei Horizontalfördereinrichtungen transportierte Stückgüter entgegennehmen, um eine vertikale Achse drehen und schräg zur jeweiligen Förderrichtung versetzen können. Eine oder mehrere Arbeitssysteme können hierbei einen Manipulator umfassen, welcher Stückgüter nach Entgegennahme sowohl um eine vertikale Achse drehen und schräg zu den parallelen Förderrichtungen versetzen kann. Hierbei kann es sein, dass die jeweiligen Stückgüter bei Entgegennahme, bei Drehen um eine vertikale Achse und/oder bei schrägem Versatz auf der jeweiligen der wenigstens zwei Horizontalfördereinrichtungen aufstehen.

Weiter ist jeder der wenigstens zwei Horizontalfördereinrichtungen mindestens ein eigenes Arbeitssystem zur Entgegennahme, zum Drehen und zum schrägen Versetzen ihrer transportierten Stückgüter zugeordnet. Denkbar ist hierbei, dass die eigenen Arbeitssysteme lediglich Stückgüter ihrer jeweiligen Horizontalfördereinrichtung selektiv entgegennehmen, ggf. um eine vertikale Achse drehen oder schräg zu den parallel orientierten Förderrichtungen versetzen können. Ein jeweiliger Arbeitsbereich der eigenen Arbeitssysteme kann sich daher über ihre jeweilige Horizontalfördereinrichtung erstrecken, jedoch nicht bis zu einer weiteren der mindestens zwei Horizontalfördereinrichtungen reichen.

Auch ist vorgesehen, dass die mehreren Arbeitssysteme über eine Steuerungseinheit miteinander in Wirkverbindung stehen, um aus mehreren über die wenigstens zwei Horizontalfördereinrichtungen transportieren Stückgütern mittels Drehens und/oder schrägen Versatzes eine vordefinierte Formation auf dem mindestens einen Formierungsband zu erzeugen. Informationen zur jeweiligen vordefinierten Formation können auf der Steuerungseinheit hinterlegt sein bzw. der Steuerungseinheit vorgegeben werden, wobei die Steuerungseinheit ein bestimmtes Zusammenwirken der mehreren Arbeitssysteme zum Erzeugen der vordefinierten Formation bewirkt.

Für diverse Ausführungsformen ist denkbar, dass eine oder mehrere Arbeitssysteme eine oder mehrere Tripoden und/oder ein oder mehrere Manipulatoren umfassen, welche jeweils Stückgüter um eine vertikale Achse drehen und schräg versetzen können. Derartige Tripoden können über mehrere bzw. drei Stellarme verfügen, die mit einer gemeinsamen Greifeinheit mechanisch gekoppelt sind und unabhängig voneinander angesteuert werden können, um die jeweiligen Stückgüter mittels der Greifeinheit entgegenzunehmen und ggf. um eine vertikale Achse zu drehen und/oder seitlich zu versetzen.

Weiter kann es sein, dass das mindestens eine Formierungsband zwischen einem jeweiligen Streckenabschnitt einer ersten Horizontalfördereinrichtung und einer zweiten Horizontalfördereinrichtung angeordnet ist. Weiter können sich ein Arbeitsbereich eines eigenen Arbeitssystems der ersten Horizontalfördereinrichtung und ein Arbeitsbereich eines eigenen Arbeitssystems einer zweiten Horizontalfördereinrichtung im Hinblick auf die parallel zueinander orientierten Förderrichtungen zumindest bereichsweise auf gleicher Höhe befinden und sich zumindest abschnittsweise über das mindestens eine Formierungsband erstrecken. Der Arbeitsbereich des eigenen Arbeitssystems der ersten Horizontalfördereinrichtung und der Arbeitsbereich des eigenen Arbeitssystems der zweiten Horizontalfördereinrichtung können sich in denkbaren Ausführungsformen ggf. nicht überschneiden. Derartige Ausführungsformen haben sich in der Praxis bewährt, um den Durchsatz weiter zu erhöhen.

Für einige Ausführungsformen, die sich in der Praxis bewährt haben, ist vorstellbar, dass sich ein Arbeitsbereich eines eigenen Arbeitssystems einer ersten Horizontalfördereinrichtung und ein Arbeitsbereich eines eigenen Arbeitssystems einer zweiten Horizontalfördereinrichtung bereichsweise überschneiden. Über die vorherig bereits beschriebene Steuerungseinheit können die Arbeitssysteme bzw. die Manipulatoren und/oder Tripoden der Arbeitssysteme derart bewegt werden, dass diese nicht miteinander in Kontakt treten und somit eine Beschädigung bzw. Kollision ausgeschlossen werden kann. Derartige Ausführungsformen zeichnen sich durch eine hohe Flexibilität bei der Erzeugung einer vordefinierten Formation aus mehreren Stückgütern aus.

Weiter kann sich eine dritte Horizontalfördereinrichtung zwischen einer ersten Horizontalfördereinrichtung und einer zweiten Horizontalfördereinrichtung befinden, wobei eine Transportrichtung des mindestens einen Formierungsbandes mit einer Förderrichtung der dritten Horizontalfördereinrichtung fluchtet. Das mindestens eine Formierungsband kann hierbei in Förderrichtung direkt an die dritte Horizontalfördereinrichtung anschließen. Weiter können der dritten Horizontalfördereinrichtung und dem mindestens einen Formierungsband ein oder mehrere Ausrichtbänder zwischengeordnet sein, über welches sich ein Arbeitsbereich eines eigenen Arbeitssystems der dritten Horizontalfördereinrichtung erstreckt. Unter Oberflächenkontakt bzw. aufstehend auf den ein oder mehreren Ausrichtbändern können hierbei Stückgüter selektiv via das eigene Arbeitssystem der dritten Horizontalfördereinrichtung um eine vertikale Achse gedreht und ggf. schräg zu den parallelen Förderrichtungen versetzt werden. An die ein oder mehreren Ausrichtbänder kann das mindestens eine Formierungsband direkt anschließen.

Auch kann das mindestens eine Formierungsband an die wenigstens zwei Horizontalfördereinrichtungen in Förderrichtung direkt anschließen. Sind drei oder mehr als drei Horizontalfördereinrichtungen vorgesehen, so kann das mindestens eine Formierungsband an die drei oder mehr als drei Horizontalfördereinrichtungen direkt anschließen.Ein jeweiliger Arbeitsbereich eines oder mehrerer eigener Arbeitssystem kann sich hierbei abschnittsweise über das in Förderrichtung direkt an die wenigstens zwei Horizontalfördereinrichtungen anschließende Formierungsband erstrecken. Hierbei kann vorgesehen sein, dass Stückgüter durch eines oder mehrere der wenigstens zwei Horizontalfördereinrichtungen zunächst an das mindestens eine Formierungsband weitergegeben werden und erst nach Übertritt auf das mindestens eine Formierungsband durch eines oder mehrerer eigene Arbeitssysteme selektiv gedreht und/oder schräg zu den parallelen Förderrichtungen versetzt werden, um eine vordefinierte Formation bzw. Vorgruppierung auf dem mindestens einen Formierungsband zu erzeugen.

Weiter kann dem mindestens einen Formierungsband und der dritten Horizontalfördereinrichtung, welche sich ggf. zwischen einer ersten Horizontalfördereinrichtung und einer zweiten Horizontalfördereinrichtung befindet, ein Ausrichtband zwischengeordnet sein, über welches sich ein Arbeitsbereich eines eigenen Arbeitssystems der dritten Horizontalfördereinrichtung erstreckt. Auch das Ausrichtband kann sich hierbei zwischen der ersten Horizontalfördereinrichtung und der zweiten Horizontalfördereinrichtung befinden.

Sind ein oder mehrerer Ausrichtbänder vorgesehen, so können diese jeweils eine umlaufende Mattenkette umfassen, auf welcher Stückgüter aufstehen und parallel zu den Förderrichtungen der wenigstens zwei Horizontalfördereinrichtungen weitertransportiert werden. Beispielsweise kann jeder der wenigstens zwei Horizontalfördereinrichtungen mindestens ein Ausrichtband zugeordnet bzw. in Förderrichtung direkt nachgeordnet sein und somit ggf. direkt an die jeweilige Horizontalfördereinrichtung anschließen. Bei Entgegennahme, Drehen um eine vertikale Achse und/oder seitlichem Versetzen schräg zu den Förderrichtungen können die Stückgüter ggf. auf dem mindestens einen Ausrichtband aufstehen. Ein oder mehrere Arbeitssysteme können zudem derart ausgebildet sein, dass diese zum Erzeugen der vordefinierten Formation Stückgüter gegenüber einer Fördergeschwindigkeit des mindestens einen Ausrichtbandes und/oder einer Fördergeschwindigkeit der jeweiligen Horizontalfördereinrichtung verzögern und/oder beschleunigen können.

Erfindungsgemäß erstreckt sich ein Arbeitsbereich des eigenen Arbeitssystems der ersten Horizontalfördereinrichtung über das mindestens eine Formierungsband, die erste Horizontalfördereinrichtung und ein Ausrichtband, welches an die erste Horizontalfördereinrichtung in Förderrichtung direkt anschließt. Das eigene Arbeitssystem der ersten Horizontalfördereinrichtung kann Stückgüter bei oder unmittelbar vor Übertritt auf das Ausrichtband selektiv entgegennehmen und unter Oberflächenkontakt mit dem Ausrichtband um eine vertikale Achse drehen und/oder schräg zu den parallelen Förderrichtungen versetzen.

Weiter kann mindestens ein eigenes Arbeitssystem mindestens zwei Manipulatoren umfassen, die in Förderrichtung hintereinander angeordnet sind und über die Steuerungseinheit zur selektiven Entgegennahme, Drehen um eine vertikale Achse und schrägen Versetzen von Stückgütern der jeweiligen Horizontalfördereinrichtung miteinander in Wirkverbindung stehen. Durch eine Horizontalfördereinrichtung transportierte bestimmte Stückgüter können hierbei einen Manipulator passieren und anteilig über den Manipulator nicht gedreht werden. Über einen weiteren Manipulator des gleichen eigenen Arbeitssystems können die bestimmten Stückgüter nachfolgend um eine vertikale Achse gedreht werden. Derartige Ausführungsformen zeichnen sich durch einen sehr hohen Durchsatz aus.

In denkbaren Ausführungsformen kann mindestens eines der eigenen Arbeitssysteme umfassen:
- Einen Manipulator, über welchen Stückgüter der jeweiligen Horizontalfördereinrichtung gedreht und schräg zur Förderrichtung versetzt werden können sowie
- Eine Überschubeinheit, mittels welcher Stückgüter schräg zur Förderrichtung versetzt und hierdurch auf dem mindestens einen Formierungsband positioniert werden können,

Die Überschubeinheit kann dem Manipulator in Förderrichtung nachgeordnet sein. Ein Arbeitsbereich der Überschubeinheit kann sich daher über das mindestens eine Formierungsband erstrecken. Beispielsweise kann die Überschubeinheit einen oder mehrere Stößel und/oder einen oder mehrere Anschläge besitzen, um die jeweiligen Stückgüter für die vordefinierte Formation auf dem mindestens einen Formierungsband zu positionieren. Die ein oder mehreren Stößel und/oder ein oder mehreren Anschläge können alternieren zwischen dem mindestens einen Formierungsband und der jeweiligen Horizontalfördereinrichtung bzw. dem jeweiligen Ausrichtband hin und her bewegt werden. Die Bewegung kann über eine Steuerungseinheit vorgegeben werden.

In bevorzugten Ausführungsformen kann die Vorrichtung mindestens ein den wenigstens zwei Horizontalfördereinrichtungen nachgeordnetes Lagenbildungsband zum Transport der vordefinierten Formation umfassen, wobei eine Transportrichtung des mindestens einen Lagenbildungsbandes parallel zu den Förderrichtungen der wenigstens zwei Horizontalfördereinrichtungen orientiert ist. Weiter kann die Vorrichtung ein oder mehrere im Bereich des mindestens einen Lagenbildungsbandes positionierte Zustellelemente umfassen, mittels welcher zum Herstellen einer palettierfähigen Lage auf dem mindestens einen Lagenbildungsband ein oder mehrere Stückgüter der vordefinierten Formation schräg zur Transportrichtung des mindestens einen Lagenbildungsbandes versetzt werden können. Die ein oder mehreren Zustellelemente können durch Anschläge ausgebildet sein, die ggf. in Richtung der vordefinierten Formation bewegt werden, hierbei mit Stückgütern der vordefinierten Formation in Oberflächenkontakt treten und die vordefinierte Formation verdichten um eine palettierfähige Lage aus der vordefinierten Formation bzw. aus der Vorgruppierung herzustellen.

Zudem ist denkbar, dass sich ein Arbeitsbereich des eigenen Arbeitssystems der ersten Horizontalfördereinrichtung, ein Arbeitsbereich des eigenen Arbeitssystems der zweiten Horizontalfördereinrichtung und ein Arbeitsbereich des eigenen Arbeitssystems der dritten Horizontalfördereinrichtung über ein gemeinsames Ausrichtband erstrecken, welches gemeinsame Ausrichtband vorzugsweise direkt an die dritte Horizontalfördereinrichtung anschließt und sich abschnittsweise zwischen einem Streckenabschnitt der ersten Horizontalfördereinrichtung und einem Streckenabschnitt der zweiten Horizontalfördereinrichtung befindet.

Weiter betrifft die Erfindung ein Verfahren zum Herstellen eines definierten Lagenbildes aus mehreren Stückgütern. Merkmale, welche vorhergehend zu diversen Ausführungsformen einer erfindungsgemäßen Vorrichtung erwähnt wurden, können ebenso bei denkbaren Ausführungsformen des erfindungsgemäßen Verfahrens vorgesehen sein. Weiter können Merkmale, welche nachfolgend zu denkbaren Ausführungsformen des Verfahrens beschrieben werden, bei diversen Ausführungsformen der erfindungsgemäßen Vorrichtung vorgesehen sein.

Im Rahmen des Verfahrens werden Stückgüter auf wenigstens zwei Horizontalfördereinrichtungen mit parallel zueinander orientierten Förderrichtungen bewegt. Die wenigstens zwei Horizontalfördereinrichtungen führen ihre Stückgüter in Richtung eines jeweils eigenen Arbeitssystems. Im Rahmen eines weiteren Verfahrensschrittes werden die Stückgüter durch die eigenen Arbeitssysteme selektiv entgegengenommen, gedreht und/oder schräg im Hinblick auf die parallelen Förderrichtungen versetzt, wobei die mehreren Arbeitssysteme hierbei derart zusammenwirken, dass aus mehreren durch die wenigstens zwei Horizontalfördereinrichtungen transportierten Stückgütern eine vordefinierte Formation auf mindestens einem Formierungsband erzeugt wird. Die eigenen Arbeitssysteme können lediglich transportiertes Stückgut ihrer zugeordneten Horizontalfördereinrichtung selektiv entgegennehmen, um eine vertikale Achse drehen und/oder schräg zu den parallelen Förderrichtungen versetzen.

Für bevorzugte Ausführungsformen ist denkbar, dass durch eine erste Horizontalfördereinrichtung transportierte Stückgüter und durch eine zweite Horizontalfördereinrichtung transportierte Stückgüter durch eigene Arbeitssysteme der ersten und zweiten Horizontalfördereinrichtungen zeitgleich entgegengenommen, um eine vertikale Achse gedreht und/oder schräg im Hinblick auf die parallelen Förderrichtungen auf das mindestens eine Formierungsband versetzt werden.

Auch kann es sein, dass Stückgüter auf wenigstens drei Horizontalfördereinrichtungen mit parallel zueinander orientierten Förderrichtungen transportiert werden, wobei sich eine dritte der mindestens drei Horizontalfördereinrichtungen zwischen einer ersten und einer zweiten Horizontalfördereinrichtung befindet und mittels der dritten Horizontalfördereinrichtung transportierte Stückgüter zumindest anteilig ohne schräges Versetzen an das mindestens eine Formierungsband weitergeführt werden. Eine Förderrichtung der dritten Horizontalfördereinrichtung und eine Transportrichtung des mindestens einen Formierungsbandes können somit fluchten.

Weiter kann es sein, dass das eigene Arbeitssystem zumindest einer ersten der wenigstens drei Horizontalfördereinrichtungen Stückgüter durch seitliches Versetzen auf dem mindestens einen Formierungsband positioniert, welches Stückgüter als bestimmte Formation parallel zu den Förderrichtungen der wenigstens zwei Horizontalfördereinrichtungen weiter transportiert.

Auch haben sich Ausführungsformen bewährt, bei welchen die vordefinierte Formation an Stückgütern vom Formierungsband an ein Lagenbildungsband übergeben bzw. weitergeführt wird, auf dem Lagenbildungsband ein oder mehrere Stückgüter der vordefinierten Formation schräg zu den parallelen Förderrichtungen versetzt werden, um aus der vordefinierten Formation eine palettierfähige Lage zu bilden. Der schräge Versatz kann hierbei über die vorherig bereits beschriebenen Zustellelemente bewirkt werden.

Auch kann es sein, dass ein eigenes Arbeitssystem mindestens einen Manipulator und ein oder mehrere dem mindestens einen Manipulator in Förderrichtung nachgeordnete Überschubeinheiten umfasst, wobei Stückgüter der jeweiligen Horizontalfördereinrichtung mittels des mindestens einen Manipulators selektiv gedreht werden und zeitlich nachfolgend mittels der ein oder mehreren Überschubeinheiten schräg zur Förderrichtung auf das mindestens eine Formierungsband versetzt werden.

Weiter können die wenigstens zwei Horizontalfördereinrichtungen unterbrechungsfrei und vorzugsweise mit gleicher Fördergeschwindigkeit betrieben werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer ersten Ausführungsform einer erfindungsgemäßen Vorrichtung zum Herstellen eines definierten Lagenbildes;
Figur 2 zeigt eine schematische Ansicht eines weiteren Beispiels einer nicht beanspruchten Vorrichtung zum Herstellen eines definierten Lagenbildes;
Figur 3 zeigt eine schematische Ansicht einer weiteren Ausführungsform einer erfindungsgemäßen Vorrichtung zum Herstellen eines definierten Lagenbildes;
Figur 4 zeigt eine schematische Ansicht einer ersten Ausführungsform einer erfindungsgemäßen Vorrichtung zum Herstellen eines definierten Lagenbildes;
Figur 5 zeigt eine schematische Ansicht eines weiteren Beispiels einer nicht beanspruchten Vorrichtung zum Herstellen eines definierten Lagenbildes;
Figur 6 zeigt eine schematische Ansicht eines weiteren Beispiels einer nicht beanspruchten Vorrichtung zum Herstellen eines definierten Lagenbildes;
Figur 7 zeigt eine schematische Ansicht eines weiteren Beispiels einer nicht beanspruchten Vorrichtung zum Herstellen eines definierten Lagenbildes;
Figur 8 zeigt eine schematische Ansicht eines weiteren Beispiels einer nicht beanspruchten Vorrichtung zum Herstellen eines definierten Lagenbildes;
Figur 9 zeigt eine schematische Ansicht eines weiteren Beispiels einer nicht beanspruchten Vorrichtung zum Herstellen eines definierten Lagenbildes.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

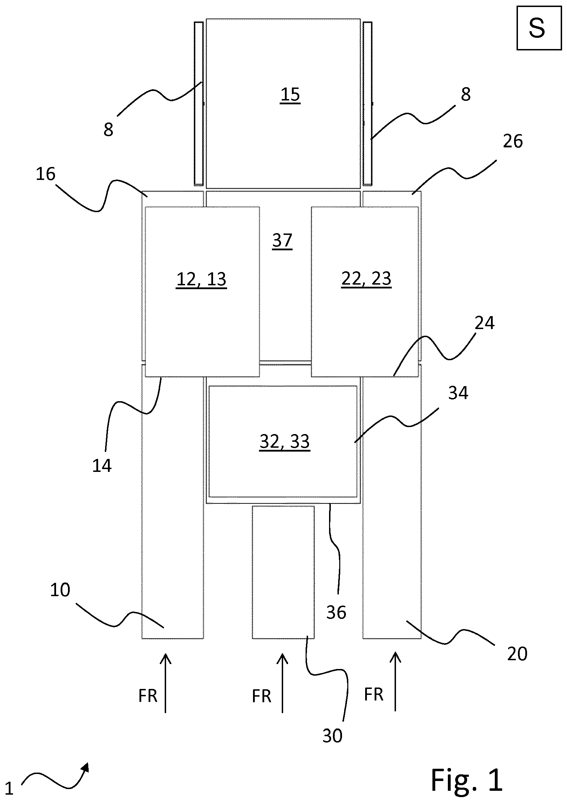

Figur 1 zeigt eine schematische Ansicht einer ersten Ausführungsform einer erfindungsgemäßen Vorrichtung 1 zum Herstellen eines definierten Lagenbildes aus mehreren Stückgütern. Aus Gründen der Übersichtlichkeit sind die Stückgüter in den Figuren vorliegender Patentanmeldung nicht mit dargestellt, können jedoch beispielsweise als Gebinde mit mehreren Behältern ausgebildet sein. Auch das Lagenbild bzw. eine vorbestimmte Formation oder Vorgruppierung, welche mehrere Stückgüter umfasst, ist in den Figuren vorliegender Patentanmeldung nicht mit dargestellt, wird jedoch auf dem Formierungsband 37, auf welches nachfolgend noch detailliert eingegangen wird, erzeugt.

Die Vorrichtung 1 umfasst drei Horizontalfördereinrichtungen 10, 20 und 30, deren Förderrichtungen FR parallel zueinander verlaufen. Die drei Horizontalfördereinrichtungen 10, 20 und 30 umfassen jeweils ein umlaufendes Transportband, auf welchem Stückgüter aufstehen und in Förderrichtung FR geführt werden. Zwischen direkt benachbarten der Horizontalfördereinrichtungen 10, 20 und 30 ist jeweils ein Abstand ausgebildet, so dass die Horizontalfördereinrichtungen 10, 20 und 30 nicht direkt aneinander angrenzen bzw. nicht direkt aneinander anstehen. Bei der Vorrichtung 1 können die Horizontalfördereinrichtungen 10, 20 und 30 unterbrechungsfrei und vorzugsweise mit gleichbleibender Fördergeschwindigkeit für Stückgüter angetrieben werden. Auf den Horizontalfördereinrichtungen 10, 20 und 30 kann jeweils ein einbahniger oder mehrbahniger Massenstrom an Stückgut transportiert werden.

Weiter umfasst das Ausführungsbeispiel einer Vorrichtung 1 aus Figur 1 drei Arbeitssysteme 12, 22 und 32, die in Figur 1 jeweils als Manipulator 13, 23 bzw. 33 ausgebildet sind bzw. jeweils einen Manipulator 13, 23 und 33 umfassen, welcher Stückgüter drehen, schräg zu den Förderrichtungen FR versetzen und gegenüber einer Transportgeschwindigkeit der jeweiligen Horizontalfördereinrichtung 10, 20 und 30 beschleunigen und verzögern können.

Ein oder mehrere Manipulatoren 13, 23 und 33 können beispielsweise als Tripoden oder weitere Greif- und/oder Handhabungseinrichtungen zur Entgegenname, zum seitlichen Versetzen gegenüber den parallel zueinander orientierten Förderrichtungen FR und zum Drehen von Stückgütern um eine vertikal orientierte Achse ausgebildet sein. Die Arbeitsbereiche der Arbeitssysteme 12, 22 und 32 bzw. der Manipulatoren 13, 23 und 33 sind in Figur 1 unter Verweis mit Ziffern 14, 24 und 34 dargestellt.

Figur 1 lässt darüber hinaus erkennen, dass der ersten Horizontalfördereinrichtung 10 ein eigenes Arbeitssystem 12 zugeordnet ist, welches über die erste Horizontalfördereinrichtung 10 transportierte Stückgüter entgegennehmen, um eine vertikale Achse drehen und schräg zu den parallelen Förderrichtungen FR versetzen kann. Auch der zweiten Horizontalfördereinrichtung 20 ist ein eigenes Arbeitssystem 22 zugeordnet, welches über die zweite Horizontalfördereinrichtung 20 transportierte Stückgüter entgegennehmen, um eine vertikale Achse drehen und schräg zu den parallelen Förderrichtungen FR versetzen kann. Zudem ist der dritten Horizontalfördereinrichtung 30 ein eigene Arbeitssystem 32 zugeordnet, welches über die dritte Horizontalfördereinrichtung 30 transportierte Stückgüter entgegennehmen, um eine vertikale Achse drehen und schräg zu den parallel zueinander orientierten Förderrichtungen FR versetzen kann. Somit ist jeder der Horizontalfördereinrichtungen 10, 20 und 30 ein eigenes Arbeitssystem 12, 22 bzw. 32 zugeordnet, welches transportierte Stückgüter der jeweiligen Horizontalfördereinrichtung 10, 20 bzw. 30 entgegennehmen, um eine vertikale Achse drehen und schräg zu den parallel zueinander orientierten Förderrichtungen FR versetzen kann. Die Anzahl der eigenen Arbeitssysteme 12, 22 und 32 bzw. der Manipulatoren 13, 23 und 33 ist daher immer identisch oder größer zur Anzahl der Horizontalfördereinrichtungen 10, 20 bzw. 30 ausgebildet.

An die erste Horizontalfördereinrichtung 10 schließt in Förderrichtung FR direkt ein Ausrichtband 16 an, so dass Stückgüter von der ersten Horizontalfördereinrichtung 10 direkt an das Ausrichtband 16 weitergeführt werden können. Ein Arbeitsbereich 14 des der ersten Horizontalfördereinrichtung 10 zugeordneten Arbeitssystems 12 erstreckt sich zumindest abschnittsweise über das Ausrichtband 16, so dass das eigene Arbeitssystem 12 der ersten Horizontalfördereinrichtung 10 Stückgüter vom Ausrichtband 16 entgegennehmen, schräg zu den parallelen Förderrichtungen FR versetzen und ggf. um eine vertikale Achse drehen kann.

Der Arbeitsbereich 14 des eigenen Arbeitssystems 12 der ersten Horizontalfördereinrichtung 10 erstreckt sich über einen gewissen Betrag auch über die erste Horizontalfördereinrichtung 10, so dass die Möglichkeit besteht, Stückgüter bereits bei oder unmittelbar vor Übertritt auf das Ausrichtband 16 mittels des eigenen Arbeitssystems 12 der ersten Horizontalfördereinrichtung 10 entgegenzunehmen und sodann schräg zu den parallelen Förderrichtungen FR zu versetzen, ggf. zu drehen und ggf. gegenüber einer Transportgeschwindigkeit der ersten Horizontalfördereinrichtung 10 und/oder des Ausrichtbandes 16 zu beschleunigen oder zu verzögern.

Wie in Figur 1 dargestellt, sind die erste Horizontalfördereinrichtung 10 und das Ausrichtband 16 nicht fluchtend in Förderrichtung FR zum Formierungsband 37 ausgerichtet, so dass durch die erste Horizontalfördereinrichtung 10 transportierte Stückgüter über das der ersten Horizontalfördereinrichtung 10 zugeordnete Arbeitssystem 12 schräg zur Förderrichtung FR versetzt werden müssen, um auf das Formierungsband 37 zu gelangen und auf dem Formierungsband 37 eine vordefinierte Formation bzw. Vorgruppierung mit mehreren Stückgütern zu bilden.

Auch an die zweite Horizontalfördereinrichtung 20 und die dritte Horizontalfördereinrichtung 30 schließen in Förderrichtung FR direkt jeweils Ausrichtbänder 26 und 36 an. Die Arbeitsbereiche 24 und 34 des zweiten Arbeitssystems 22 und des dritten Arbeitssystems 32 erstrecken sich hierbei jeweils zumindest abschnittsweise über das jeweilige Ausrichtband 26 bzw. 36, so dass das jeweilige Arbeitssystem 22 bzw. 32 Stückgüter vom jeweiligen Ausrichtband 26 bzw. 36 entgegennehmen, schräg zu den parallelen Förderrichtungen FR versetzen und ggf. um eine vertikale Achse drehen kann. Die Ausrichtbänder 16, 26 und 36 können beispielsweise als Mattenkettenförderer ausgebildet sein.

Zwischen den Ausrichtbändern 16 und 26, die direkt in Förderrichtung FR an die erste und zweite Horizontalfördereinrichtung 10 und 20 anschließen, umfasst die Vorrichtung 1 ein Formierungsband 37, auf welchem eine vordefinierte Formation von Stückgütern gebildet wird bzw. auf welchem mittels der Arbeitssysteme 12, 22 und 32 eine Vorgruppierung für eine palettierfähige Lage erzeugt wird. Das Formierungsband 37 ist dem Ausrichtband 36 in Förderrichtung FR direkt nachgeordnet. Auch das Formierungsband 37 kann als Mattenkettenförderer ausgebildet sein. Die Ausrichtbänder 16 und 26, welche der ersten und zweiten Horizontalfördereinrichtung 10 bzw. 20 in Förderrichtung FR direkt nachgeordnet sind, grenzen auf gegenüberliegenden Seiten an das Formierungsband 37 direkt an.

Über das Ausrichtband 36, welches in Förderrichtung FR an die dritte Horizontalfördereinrichtung 30 direkt anschließt, erstreckt sich partiell der Arbeitsbereich 14 des eigenen Arbeitssystems 12 der ersten Horizontalfördereinrichtung 10, weiter partiell der Arbeitsbereich 24 des eigenen Arbeitssystems 22 der zweiten Horizontalfördereinrichtung 20 sowie vollständig der Arbeitsbereich 34 des eigenen Arbeitssystems 32 der dritten Horizontalfördereinrichtung 30. Das eigene Arbeitssystem 32 der dritten Horizontalfördereinrichtung 30 kann durch die dritte Horizontalfördereinrichtung 30 transportierte Stückgüter selektiv um eine vertikal Achse drehen und schräg zur Förderrichtung FR auf dem Ausrichtband 36 versetzen, so dass diese sich zur Erzeugung einer Vorgruppierung bzw. vorbestimmten Formation nach Übertritt auf das Formierungsband 37 in drehrichtiger Ausrichtung und relativer Soll-Orientierung gegenüber weiteren Stückgütern der vorbestimmten Formation befinden. Bei Drehen bzw. seitlichem Versatz von Stückgütern auf dem Ausrichtband 36 können die jeweiligen Stückgüter mit dem Ausrichtband 36 in Oberflächenkontakt stehen bzw. auf dem Ausrichtband 36 aufstehen.

Die Arbeitsbereiche 14, 24 und 34 der Arbeitssysteme 12, 22 und 32 überschneiden sich beim Ausführungsbeispiel einer Vorrichtung 1 aus Figur 1 nicht, so dass die Arbeitssysteme 12, 22 und 32 bzw. die Manipulatoren 13, 23 und 33 nicht miteinander kollidieren können. Eine Ansteuerung der Arbeitssysteme 12, 22 und 32 bzw. ein selektive Drehen und seitliches Versetzen von über die Horizontalfördereinrichtungen 10, 20 und 30 transportierten Stückgütern mittels der Arbeitssysteme 12, 22 und 32 wird durch die Steuerungseinheit S vorgegeben. Die Steuerungseinheit S veranlasst ein Zusammenwirken der Arbeitssysteme 12, 22 und 32 bzw. der Manipulatoren 13, 23 und 33 derart, dass Stückgüter auf dem Formierungsband 37 eine vordefinierte Formation bzw. eine Vorgruppierung einnehmen.

Die vordefinierte Formation bzw. Vorgruppierung wird vom Formierungsband 37 an das Lagenbildungsband 15 weitergeführt. Die Transportrichtung des Formierungsbandes 37 und die Transportrichtung des Lagenbildungsbandes 15 sind parallel zu den Förderrichtungen FR der Horizontalfördereinrichtungen 10, 20 und 30 orientiert. Befindet sich die vordefinierte Formation bzw. Vorgruppierung auf dem Lagenbildungsband 15, so können zwei auf gegenüberliegenden Seiten des Lagenbildungsbandes 15 angeordnete Zustellelemente aufeinander zubewegt werden, hierbei mit der vordefinierten Formation bzw. Vorgruppierung in Kontakt treten und eine Verdichtung der vordefinierten Formation bzw. Vorgruppierung bewirken, wobei eine palettierfähige Lage hergestellt wird. Über das Lagenbildungsband 15 wird die palettierfähige Lage sodann in Richtung einer Palettierstation bewegt, die in den Figuren vorliegender Patentanmeldung nicht mit dargestellt ist. Auch das Formierungsband 37 sowie das Auflaufband 15 können zur Erhöhung des Durchsatzes kontinuierlich und unterbrechungsfrei betrieben werden.

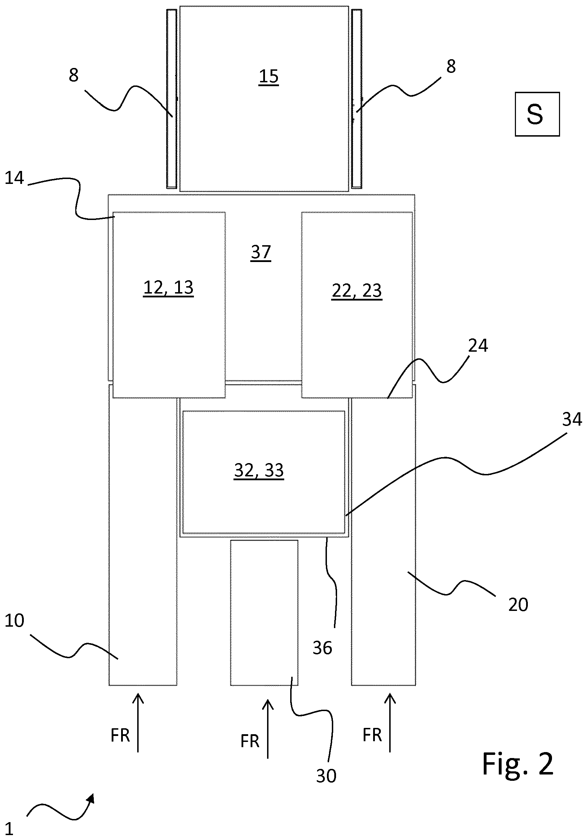

Figur 2 zeigt eine schematische Ansicht eines weiteren Beispiels einer nicht beanspruchten Vorrichtung 1 zum Herstellen eines definierten Lagenbildes bzw. einer vordefinierten Formation. Auch das Beispiel einer Vorrichtung 1 gemäß Figur 2 besitzt drei Horizontalfördereinrichtungen 10, 20 und 30 mit parallel zueinander orientierten Förderrichtungen FR, eigenen Arbeitssystemen 12, 22 und 32 bzw. Manipulatoren 13, 23 und 33 für jede der drei Horizontalfördereinrichtungen 10, 20 und 30 und ein Lagenbildungsband 15 sowie auf gegenüberliegenden Seiten des Lagenbildungsbandes 15 positionierte Zustellelemente 8, um aus einer vordefinierten Formation bzw. Vorgruppierung mittels Verdichtung eine palettierfähige Lage zu bilden.

Das Formierungsband 37 schließt in Figur 2 direkt an die erste Horizontalfördereinrichtung 10 und die zweite Horizontalfördereinrichtung 20 an, der dritten Horizontalfördereinrichtung 30 und dem Formierungsband 37 ist weiterhin ein Ausrichtband 36 zwischengeordnet. Eine Zusammenschau der Figuren 1 und 2 lässt zudem erkennen, dass beim Ausführungsbeispiel aus Figur 2 auf die Ausrichtbänder 16 und 26 verzichtet werden kann, da Stückgüter von der ersten Horizontalfördereinrichtung 10 und der zweiten Horizontalfördereinrichtung 20 direkt an das Formierungsband 37 weitergeführt werden können. Der in Figur 1 zwischen dem Ausrichtband 16 und dem Formierungsband 37 sowie zwischen dem Ausrichtband 26 und dem Formierungsband 37 ausgebildete Spalt ist beim Ausführungsbeispiel aus Figur 2 nicht vorhanden, was ein problemfreies seitliches Versetzen von Stückgütern durch das erste Arbeitssystem 12 und das zweite Arbeitssystem 22 auf das Formierungsband 37 erleichtern kann.

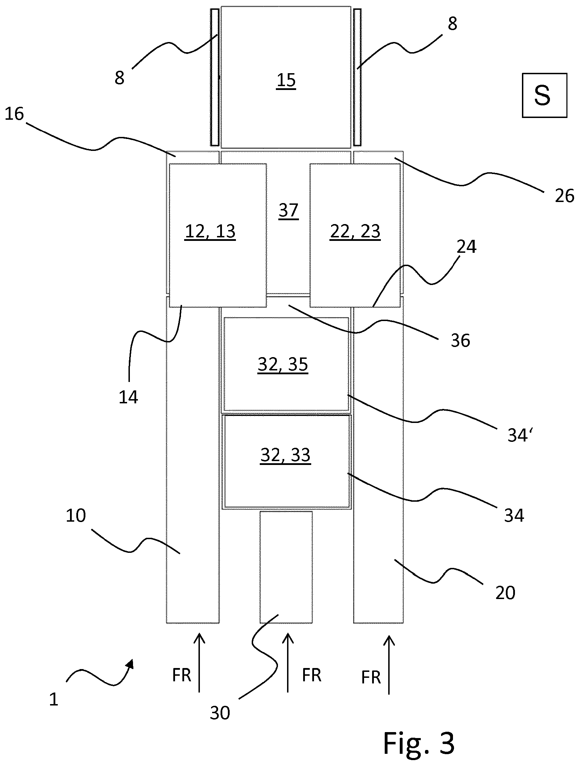

Figur 3 zeigt eine schematische Ansicht einer weiteren Ausführungsform einer erfindungsgemäßen Vorrichtung 1 zum Herstellen eines definierten Lagenbildes. Auch die Ausführungsform einer Vorrichtung 1 gemäß Figur 3 besitzt drei Horizontalfördereinrichtungen 10, 20 und 30 mit parallel zueinander orientierten Förderrichtungen FR, eigene Arbeitssysteme 12, 22 und 32 für jede der drei Horizontalfördereinrichtungen 10, 20 und 30 und ein Lagenbildungsband 15 sowie auf gegenüberliegenden Seiten des Lagenbildungsbandes 15 positionierte Zustellelemente 8, um aus einer vordefinierten Formation bzw. Vorgruppierung mittels Verdichtung eine palettierfähige Lage zu bilden.

Das eigene Arbeitssystem 12 der ersten Horizontalfördereinrichtung 10 umfasst weiterhin einen Manipulator 13. Auch das eigene Arbeitssystem 22 der zweiten Horizontalfördereinrichtung 20 umfasst weiterhin einen Manipulator 23. Beim Ausführungsbeispiel aus Figur 3 umfasst das eigene Arbeitssystem 32 der dritten Horizontalfördereinrichtung 30 zwei Manipulatoren 33 und 35, wobei der zweite Manipulator 35 des Arbeitssystems 32 dem ersten Manipulator 33 des Arbeitssystems 32 in Förderrichtung FR nachgeordnet ist.

Sofern ein Drehen und/oder ein seitliches Versetzen im Hinblick auf die parallelen Förderrichtungen FR für durch die dritte Horizontalfördereinrichtung 30 transportierte Stückgüter vorgesehen ist, können einzelne dieser Stückgüter zunächst den ersten Manipulator 33 des Arbeitssystems 32 passieren, ohne von diesem entgegengenommen bzw. gegenüber den parallelen Förderrichtungen FR seitlich versetzt oder um eine vertikale Achse gedreht zu werden. Der in Förderrichtung FR nachgeordnete Manipulator 35 kann sodann ein seitliches Versetzen gegenüber den parallelen Förderrichtungen FR und/oder ein Drehen von Stückgütern unter Berücksichtigung der vordefinierten Formation bzw. der auf dem Formierungsband 37 herzustellenden Vorgruppierung bewirken. Die Manipulatoren 33 und 35 des eigenen Arbeitssystems 32 der dritten Horizontalfördereinrichtung 30 können somit zusammenwirken, um transportierte Stückgüter der dritten Horizontalfördereinrichtung 30 unter Berücksichtigung der vordefinierten Formation bzw. Vorgruppierung des Formierungsbandes 37 selektiv um eine vertikale Achse zu drehen und/oder seitlich im Hinblick auf die parallelen Förderrichtungen FR zu versetzen. Die beiden Arbeitsbereiche 34 und 34' des eigenen Arbeitssystems 32 der dritten Horizontalfördereinrichtung 30 bzw. der Manipulatoren 33 und 35 erstrecken sich über das Ausrichtband 36, welches der dritten Horizontalfördereinrichtung 30 in Förderrichtung FR direkt nachgeordnet ist. Denkbar ist auch, dass jedem der Manipulatoren 33 und 35 ein eigenes Ausrichtband 36 zugeordnet ist, wobei die Ausrichtbänder ggf. in Förderrichtung FR direkt aneinander anschließen.

Beim Ausführungsbeispiel aus Figur 3 ist zudem vorstellbar, dass einer der Manipulatoren 33 und 35 des eigenen Arbeitssystems 32 der dritten Horizontalfördereinrichtung 30 ein seitliches Versetzen eines Stückgutes bewirkt, während der weitere Manipulator 33 bzw. 35 das jeweilige Stückgut um eine vertikale Achse dreht. Zudem kann es sein, dass die dritte Horizontalfördereinrichtung 30 gegenüber der ersten Horizontalfördereinrichtung 10 und/oder der zweiten Horizontalfördereinrichtung 20 eine höhere Fördergeschwindigkeit besitzt. Vorrichtungen 1 gemäß Ausführungsbeispiel aus Figur 3 zeichnen sich durch einen hohen Durchsatz aus.

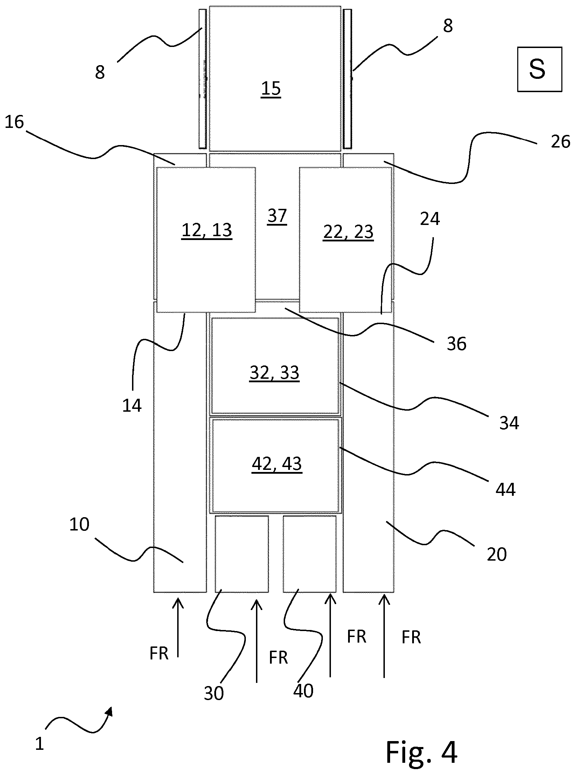

Figur 4 zeigt eine schematische Ansicht einer ersten Ausführungsform einer erfindungsgemäßen Vorrichtung 1 zum Herstellen eines definierten Lagenbildes. Die Ausführungsform einer Vorrichtung 1 gemäß Figur 4 besitzt ein Lagenbildungsband 15 sowie auf gegenüberliegenden Seiten des Lagenbildungsbandes 15 positionierte Zustellelemente 8, um aus einer vordefinierten Formation bzw. Vorgruppierung mittels Verdichtung eine palettierfähige Lage zu bilden. Die vordefinierte Formation bzw. Vorgruppierung wird weiterhin via das Formierungsband 37 an das Lagenbildungsband 15 weitergeführt.

Die Vorrichtung 1 umfasst in Figur 4 eine erste Horizontalfördereinrichtung 10, eine zweite Horizontalfördereinrichtung 20, eine dritte Horizontalfördereinrichtung 30 und eine vierte Horizontalfördereinrichtung 40, die parallel zueinander orientierte Förderrichtungen FR besitzen. Auch beim Ausführungsbeispiel aus Figur 4 ist für jede der Horizontalfördereinrichtungen 10, 20, 30 und 40 ein eigenes Arbeitssystem 12, 22, 32 und 42 vorgesehen, um über die jeweilige Horizontalfördereinrichtung 10, 20, 30 bzw. 40 transportierte Stückgüter entgegennehmen und ggf. schräg zur Förderrichtung FR zu versetzen und/ oder um eine vertikale Achse zu drehen.

Jedes der Arbeitssysteme 12, 22, 32 und 42 besitzt einen eigenen Arbeitsbereich 14, 24, 34 und 44, wobei sich die Arbeitsbereiche 14, 24, 34 und 44 der Arbeitssysteme 12, 22, 32 und 42 nicht überschneiden. Der dritten Horizontalfördereinrichtung 30 und der vierten Horizontalfördereinrichtung 40 ist ein gemeinsames Ausrichtband 36 in Förderrichtung FR direkt nachgeordnet, so dass sowohl transportierte Stückgüter der dritten Horizontalfördereinrichtung 30 als auch transportierte Stückgüter der vierten Horizontalfördereinrichtung 40 direkt an das gemeinsame Ausrichtband 36 weitergeführt werden können.

Der Arbeitsbereich 34 des eigenen Arbeitssystems 32 der dritten Horizontalfördereinrichtung 30 erstreckt sich derart über das Ausrichtband 36, dass das Arbeitssystem 32 sowohl transportierte Stückgüter der dritten Horizontalfördereinrichtung 30 selektiv entgegennehmen, um eine vertikal Achse drehen und/oder schräg zur Förderrichtung FR versetzen kann als auch transportierte Stückgüter der vierten Horizontalfördereinrichtung 40 selektiv entgegennehmen, um eine vertikale Achse drehen und/oder schräg zur Förderrichtung FR versetzen kann. Der Arbeitsbereich 44 des eigenen Arbeitssystems 42 der vierten Horizontalfördereinrichtung 40 erstreckt sich derart über das Ausrichtband 36, dass das Arbeitssystem 42 sowohl transportierte Stückgüter der dritten Horizontalfördereinrichtung 30 selektiv entgegennehmen, um eine vertikale Achse drehen und/oder schräg zur Förderrichtung FR versetzen kann als auch transportierte Stückgüter der vierten Horizontalfördereinrichtung 40 selektiv entgegennehmen, um eine vertikale Achse drehen und/oder schräg zur Förderrichtung FR versetzen kann. Eine selektive Entgegennahme von transportierten Stückgütern der dritten Horizontalfördereinrichtung 30 und der vierten Horizontalfördereinrichtung 40 durch das eigene Arbeitssystem 32 der dritten Horizontalfördereinrichtung 30 und das eigene Arbeitssystem 40 der vierten Horizontalfördereinrichtung 40 wird via die Steuerungseinheit S vorgegeben.

Die erste Horizontalfördereinrichtung 10, das eigene Arbeitssystem 12 der ersten Horizontalfördereinrichtung 10, die zweite Horizontalfördereinrichtung 20, das eigene Arbeitssystem 22 der zweiten Horizontalfördereinrichtung 20 sowie die Ausrichtbänder 16 und 26 und das Formierungsband 37 sind entsprechend dem Ausführungsbeispiel aus Figur 1 ausgebildet.

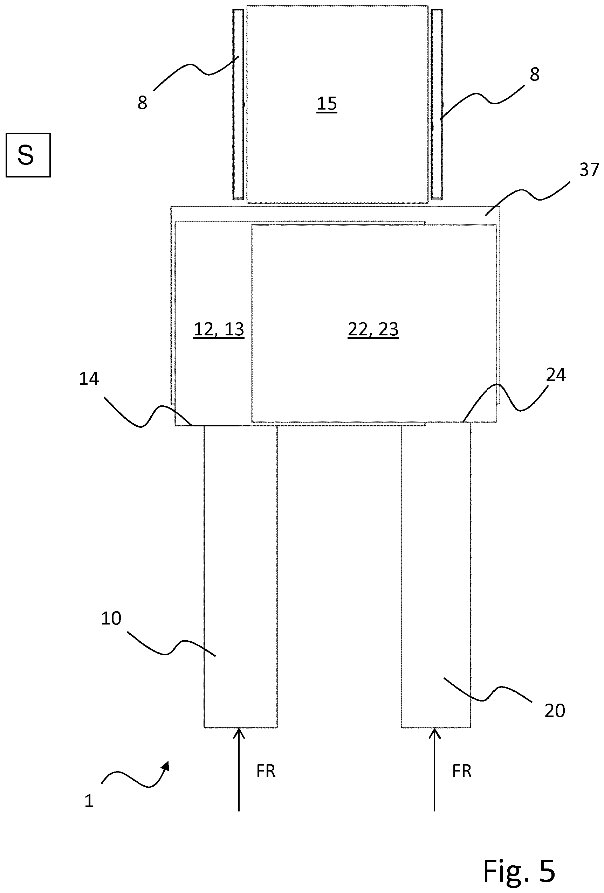

Figur 5 zeigt eine schematische Ansicht eines weiteren Beispiels einer nicht beanspruchten Vorrichtung 1 zum Herstellen eines definierten Lagenbildes. Die Vorrichtung 1 aus dem, Beispiel aus Figur 5 besitzt zwei Horizontalfördereinrichtungen 10 und 20, deren Förderrichtungen FR parallel zueinander orientiert sind. Den beiden Horizontalfördereinrichtungen 10 und 20 ist in Förderrichtung FR das Formierungsband 37 direkt nachgeordnet.

Sowohl der ersten Horizontalfördereinrichtung 10 als auch der zweiten Horizontalfördereinrichtung 20 ist ein eigenes Arbeitssystem 12 bzw. 22 zugeordnet, welche als Manipulatoren 13 bzw. 23 ausgebildet sind. Die Arbeitssysteme 12 und 22 besitzen Arbeitsbereiche 14 und 24, die sich überschneiden und über das Formierungsband 37 erstrecken, um aus durch die erste Horizontalfördereinrichtung 10 transportierten Stückgütern und aus durch die zweite Horizontalfördereinrichtung 20 transportierten Stückgütern auf dem Formierungsband 37 eine vordefinierte Formation bzw. eine Vorgruppierung zu erzeugen. Eine palettierfähige Lage wird weiterhin aus der vordefinierten Formation bzw. Vorgruppierung auf dem Lagenbildungsband 15 mittels der Zustellelemente 8 bewirkt. Beispiele gemäß Figur 5 besitzen sowohl einen hohen Durchsatz als auch eine hohe Flexibilität bei der Erzeugung einer vordefinierten Formation bzw. Vorgruppierung auf dem Formierungsband 37 aus durch die erste und die zweite Horizontalfördereinrichtung 10 und 20 transportierten Stückgütern.

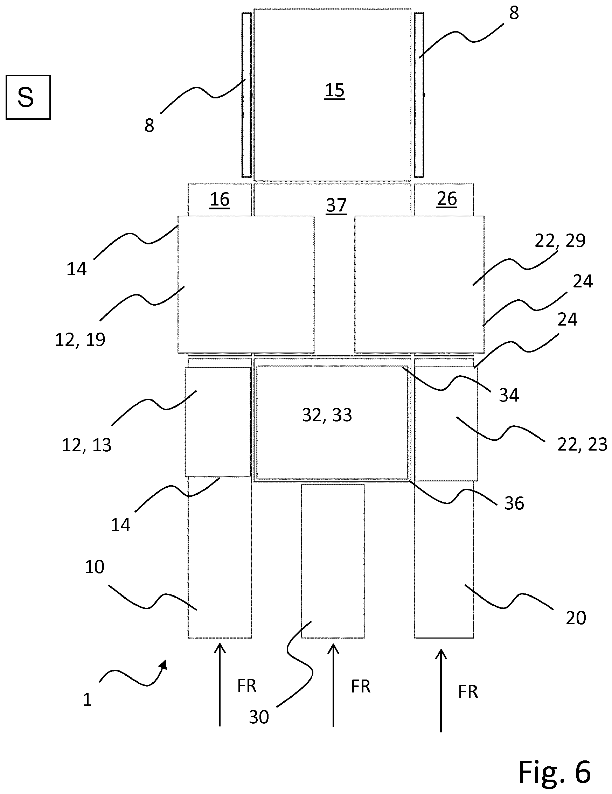

Figur 6 zeigt eine schematische eines weiteren Beispiels einer nicht beanspruchten Vorrichtung 1 zum Herstellen eines definierten Lagenbildes. Das Beispiel aus Figur 6 besitzt drei Horizontalfördereinrichtungen 10, 20 und 30 sowie für jedes der drei Horizontalfördereinrichtungen 10, 20 und 30 ein eigenes Arbeitssystem 12, 22 und 32. Die dritte Horizontalfördereinrichtung 30 befindet sich zwischen der ersten Horizontalfördereinrichtung 10 und der zweiten Horizontalfördereinrichtung 20.

Das eigene Arbeitssystem 32 der dritten Horizontalfördereinrichtung 30 ist als Manipulator 33 ausgebildet und kann über die dritte Horizontalfördereinrichtung 30 transportierte Stückgüter auf dem Ausrichtband 36 drehen und ggf. schräg zu den parallelen Förderrichtungen FR versetzen. Der Arbeitsbereich 34 des eigenen Arbeitssystems 32 der dritten Horizontalfördereinrichtung 30 erstreckt sich hierzu über das Ausrichtband 36.

Das eigene Arbeitssystem 12 der ersten Horizontalfördereinrichtung 10 umfasst einen Manipulator 13 sowie eine Überschubeinheit 19, welche dem Manipulator 13 in Förderrichtung FR nachgeordnet ist. Der Manipulator 13 kann hierbei transportierte Stückgüter der ersten Horizontalfördereinrichtung 10 selektiv drehen. Zeitlich hierauf folgend können die über die erste Horizontalfördereinrichtung 10 transportierten Stückgüter durch die Überschubeinheit 19 schräg zu den parallelen Förderrichtungen FR auf das Formierungsband 37 gesetzt werden, so dass eine Ausrichtung und Position des jeweiligen Stückgutes mit einer Soll-Position bzw. Soll-Ausrichtung in der vorbestimmten Formation übereinstimmt. Ein Zusammenwirken des Manipulators 13 mit der Überschubeinheit 19 wird durch die Steuerungseinheit S bewirkt, um Stückgüter in vordefinierter Formation auf dem Formierungsband 37 zu positionieren.

Ebenso besitzt das eigene Arbeitssystem 22 der zweiten Horizontalfördereinrichtung 20 einen Manipulator 23 und eine Überschubeinheit 29, wobei der Manipulator 23 transportierte Stückgüter der zweiten Horizontalfördereinrichtung 20 selektiv dreht und die Überschubeinheit 29 ggf. gedreht Stückgüter auf das Formierungsband 37 setzt. Auch das eigene Arbeitssystem 22 der zweiten Horizontalfördereinrichtung 20 steht hierzu mit der Steuerungseinheit S in Verbindung.

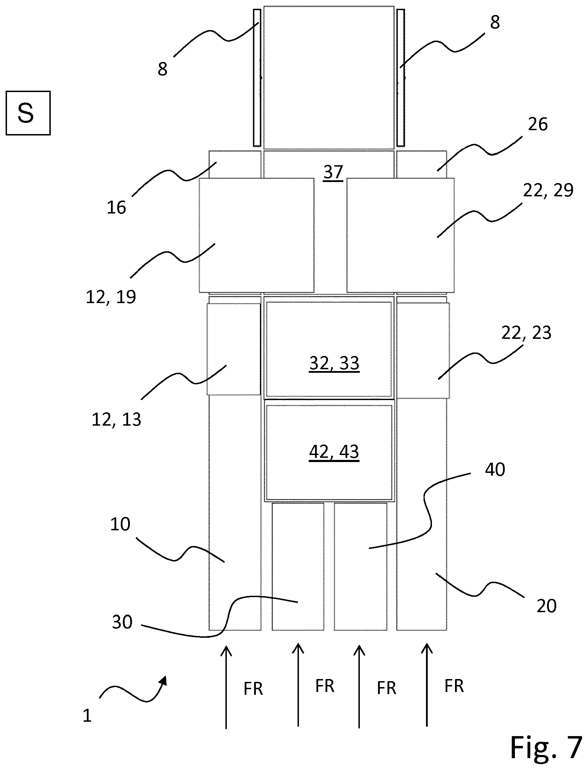

Figur 7 zeigt eine schematische Ansicht eines weiteren Beispiels einer nicht beanspruchten Vorrichtung 1 zum Herstellen eines definierten Lagenbildes. Die Vorrichtung 1 umfasst eine erste Horizontalfördereinrichtung 10, eine zweite Horizontalfördereinrichtung 20, eine dritte Horizontalfördereinrichtung 30 und eine vierte Horizontalfördereinrichtung 40, die jeweils einen Manipulator 13, 23, 33 und 43 umfassen. Die dritte und die vierte Horizontalfördereinrichtung 30 und 40 befinden sich zwischen der ersten Horizontalfördereinrichtung 10 und der zweiten Horizontalfördereinrichtung 20 und sind benachbart.

Das eigene Arbeitssystem 12 der ersten Horizontalfördereinrichtung 10 und das eigene Arbeitssystem 22 der zweiten Horizontalfördereinrichtung 20 sind entsprechend dem Beispiel aus Figur 6 ausgebildet und setzen sich jeweils aus einem Manipulator 13 bzw. 23 zusammen, über welchen Stückgüter selektiv gedreht und ggf. schräg zu den parallelen Förderrichtungen FR versetzt werden können, sowie einer Überschubeinheit 19 bzw. 29, die dem jeweiligen Manipulator 13 bzw. 23 in Förderrichtung FR nachgeordnet ist und Stückgüter der ersten bzw. zweiten Horizontalfördereinrichtung 10 und 20 auf das Formierungsband 37 setzt.

Das eigene Arbeitssystem 32 bzw. der Manipulator 33 der dritten Horizontalfördereinrichtung 30 kann sowohl transportierte Stückgüter der dritten Horizontalfördereinrichtung 30 selektiv entgegennehmen, ggf. um eine vertikale Achse drehen und schräg zu den parallelen Förderrichtungen FR versetzen. Das eigene Arbeitssystem 42 bzw. der Manipulator 43 der vierten Horizontalfördereinrichtung kann ebenso sowohl transportierte Stückgüter der dritten Horizontalfördereinrichtung 30 als auch transportierte Stückgüter der dritten Horizontalfördereinrichtung 30 selektiv entgegennehmen, ggf. um eine vertikale Achse drehen und schräg zu den Förderrichtungen FR versetzen, um eine vordefinierte Formation auf dem Formierungsband 37 auszubilden. Ein Zusammenwirken der eigenen Arbeitssysteme 32 und 42 bzw. der Manipulatoren 33 und 43 wird mittels der Steuerungseinheit S bewirkt.

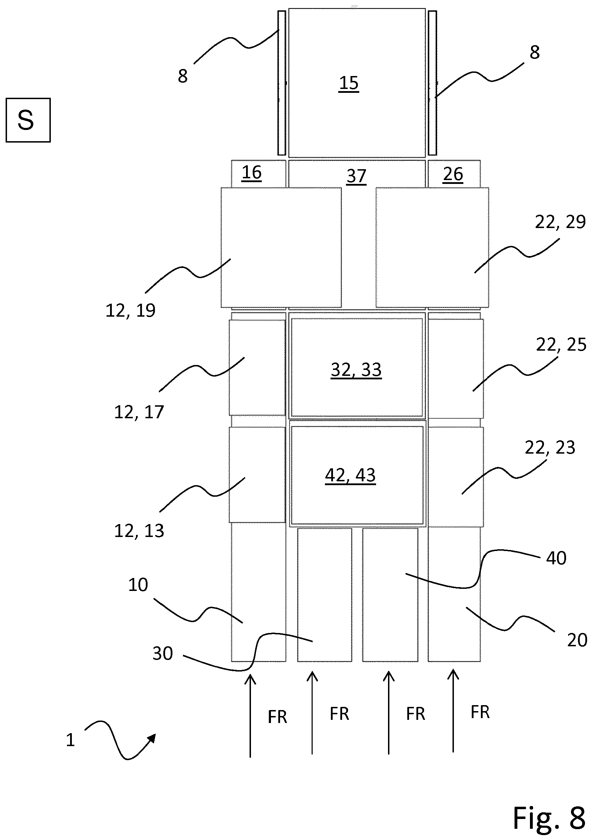

Figur 8 zeigt eine schematische Ansicht eines weiteren Beispiels einer nicht beanspruchten Vorrichtung 1 zum Herstellen eines definierten Lagenbildes. Die Vorrichtung 1 umfasst eine erste Horizontalfördereinrichtung 10, eine zweite Horizontalfördereinrichtung 20, eine dritte Horizontalfördereinrichtung 30 und eine vierte Horizontalfördereinrichtung 40. Jeder der Horizontalfördereinrichtungen 10, 20, 30 und 40 ist ein eigenes Arbeitssystem 12, 22, 32 und 42 zugeordnet. Die eigenen Arbeitssysteme 32 und 33 der dritten Horizontalfördereinrichtung 30 und der vierten Horizontalfördereinrichtung 40 umfassen jeweils einen Manipulator 33 und 43, wobei der Manipulator 33 des eigenen Arbeitssystems 32 der dritten Horizontalfördereinrichtung 30 sowohl mittels der dritten Horizontalfördereinrichtung 30 transportierte Stückgüter selektiv entgegennehmen, um eine vertikale Achse drehen und gegenüber den parallel zueinander orientierten Förderrichtungen FR seitlich versetzen kann als auch über die vierte Horizontalfördereinrichtung 40 transportierte Stückgüter selektiv entgegennehmen, um eine vertikale Achse drehen und gegenüber den parallelen Förderrichtungen FR seitlich versetzen kann. Auch der Manipulator 43 des eigenen Arbeitssystems 42 der vierten Horizontalfördereinrichtung 40 kann sowohl mittels der dritten Horizontalfördereinrichtung 30 transportierte Stückgüter selektiv entgegennehmen, um eine vertikale Achse drehen und gegenüber den parallel zueinander orientierten Förderrichtungen FR seitlich versetzen als auch über die vierte Horizontalfördereinrichtung 40 transportierte Stückgüter selektiv entgegennehmen, um eine vertikale Achse drehen und gegenüber den parallelen Förderrichtungen FR seitlich versetzen.

Das eigene Arbeitssystem 12 der ersten Horizontalfördereinrichtung 10 umfasst einen ersten Manipulator 13 und einen zweiten Manipulator 17, die jeweils transportierte Stückgüter der ersten Horizontalfördereinrichtung 10 drehen können, wobei der zweite Manipulator 17 dem ersten Manipulator 13 in Förderrichtung FR nachgeordnet ist. Somit können diverse Stückgüter den ersten Manipulator 13 passieren und nicht von diesem gedreht werden. Zeitlich hierauf folgend können die Stückgüter ggf. via den zweiten Manipulator 17 gedreht werden, sofern dies zum Erzeugen der vordefinierten Formation auf dem Formierungsband 37 zweckdienlich ist. Mittels der Überschubeinheit 19 können die Stückgüter zeitlich hierauf folgend schräg zu den parallelen Förderrichtungen FR auf das Formierungsband 37 gesetzt werden. Entsprechen dem eigenen Arbeitssystem 12 der ersten Horizontalfördereinrichtung 10 ist auch das eigene Arbeitssystem 22 der zweiten Horizontalfördereinrichtung 20 ausgebildet und umfasst zwei Manipulatoren 23 und 25 sowie eine Überschubeinheit 29 zum seitlichen Versetzen von Stückgütern auf das Formierungsband 37. Über das Lagenbildungsband 15 wird die vordefinierte Formation bzw. Vorgruppierung zum Herstellen einer palettierfähigen Lage verdichtet.

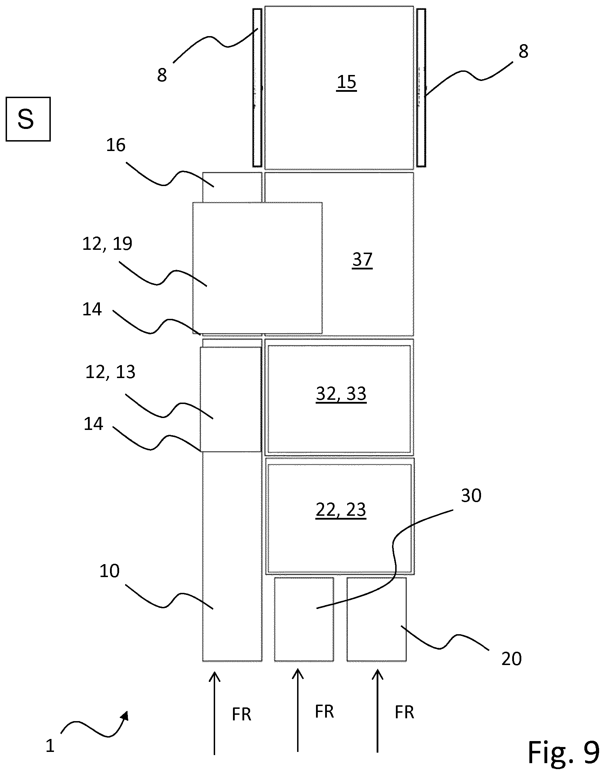

Figur 9 zeigt eine schematische eines weiteren Beispiels einer nicht beanspruchten Vorrichtung 1 zum Herstellen eines definierten Lagenbildes. Die Vorrichtung 1 gemäß Figur 9 umfasst eine erste Horizontalfördereinrichtung 10, eine zweite Horizontalfördereinrichtung 20 und eine dritte Horizontalfördereinrichtung 30. Die Horizontalfördereinrichtungen 10, 20 und 30 besitzen parallele Förderrichten FR. Jeder der Horizontalfördereinrichtungen 10, 20 und 30 ist ein eigenes Arbeitssystem 12, 22 und 32 zugeordnet. Die eigenen Arbeitssysteme 22 und 32 der zweiten Horizontalfördereinrichtung 20 und der dritten Horizontalfördereinrichtung 30 sind als Manipulatoren 23 und 33 ausgebildet, welche jeweils sowohl durch die dritte Horizontalfördereinrichtung 30 transportierte Stückgüter als auch durch die zweite Horizontalfördereinrichtung 20 transportierte Stückgüter um eine vertikale Achse drehen und schräg zu den parallelen Förderrichtungen FR versetzen können.

Ein Formierungsband 37 ist vorgesehen, dessen Transportrichtung zu den Förderrichtungen FR der zweiten Horizontalfördereinrichtung 20 und der dritten Horizontalfördereinrichtung 30 fluchtet.

Das eigene Arbeitssystem 12 der ersten Horizontalfördereinrichtung 10 umfasst einen Manipulator 13, welcher Stückgüter selektiv drehen kann sowie eine Überschubeinheit 19, welche Stückgüter schräg zu den parallelen Förderrichtungen FR auf ein Formierungsband 37 versetzt, um auf dem Formierungsband 37 eine vordefinierte Formation bzw. Vorgruppierung auszubilden. Der Arbeitsbereich 14 der Überschubeinheit 19 erstreckt sich über ein Ausrichtband 16, das in Förderrichtung FR direkt an die erste Horizontalfördereinrichtung 10 anschließt und seitlich an das Formierungsband 37 angrenzt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 8: Zustellelement
- 10: Erste Horizontalfördereinrichtung
- 12: Arbeitssystem
- 13: Manipulator
- 14: Arbeitsbereich
- 15: Lagenbildungsband
- 16: Ausrichtband
- 17: Manipulator
- 19: Überschubeinheit
- 20: Zweite Horizontalfördereinrichtung
- 22: Arbeitssystem
- 23: Manipulator
- 24: Arbeitsbereich
- 26: Ausrichtband
- 29: Überschubeinheit
- 30: Dritte Horizontalfördereinrichtung
- 32: Arbeitssystem
- 33: Manipulator
- 35: Manipulator
- 36: Ausrichtband
- 37: Formierungsband
- 40: Horizontalfördereinrichtung
- 42: Arbeitssystem
- 43: Manipulator
- 44: Arbeitsbereich
- FR: Förderrichtung
- S: Steuerungseinheit

## Patentansprüche

1. Vorrichtung (1) zum Herstellen eines definierten Lagenbildes aus mehreren Stückgütern, aufweisend
- Wenigstens zwei Horizontalfördereinrichtungen (10, 20, 30, 40), die jeweils Stückgüter transportieren können und parallel zueinander orientierte Förderrichtungen (FR) besitzen,
- Mindestens ein den wenigstens zwei Horizontalfördereinrichtungen (10, 20, 30, 40) in Förderrichtung (FR) nachgeordnetes Formierungsband (37) mit einer Transportrichtung, die parallel zu den Förderrichtungen (FR) orientiert ist,
- Mehrere Arbeitssysteme (12, 22, 32, 42), die via die wenigstens zwei Horizontalfördereinrichtung (10, 20, 30, 40) transportierte Stückgüter entgegennehmen, um eine vertikale Achse drehen und schräg zu den parallelen Förderrichtungen (FR) versetzen können,
wobei
a) Jeder der wenigstens zwei Horizontalfördereinrichtungen (10, 20, 30, 40) mindestens ein eigenes Arbeitssystem (12, 22, 32, 42) zur Entgegennahme, zum Drehen und zum schrägen Versetzen ihrer transportierten Stückgüter zugeordnet ist und wobei
b) die mehreren Arbeitssysteme (12, 22, 32, 42) über eine Steuerungseinheit (S) miteinander in Wirkverbindung stehen, um aus mehreren über die wenigstens zwei Horizontalfördereinrichtungen (10, 20, 30, 40) transportierten Stückgütern mittels Drehens und/oder schrägen Versatzes eine vordefinierte Formation auf dem mindestens einen Formierungsband (37) zu erzeugen, **dadurch gekennzeichnet, dass**
sich ein Arbeitsbereich (14) des eigenen Arbeitssystems (12) der ersten Horizontalfördereinrichtung (10) über das mindestens eine Formierungsband (37), die erste Horizontalfördereinrichtung (10) und ein Ausrichtband (16) erstreckt, welches an die erste Horizontalfördereinrichtung (10) in Förderrichtung (FR) direkt anschließt.

2. Vorrichtung nach Anspruch 1, bei welcher ein oder mehrere Arbeitssysteme (12, 22, 32, 42) eine oder mehrere Tripoden und/oder ein oder mehrere Manipulatoren (13, 17, 23, 33, 35, 43) umfassen, welche jeweils Stückgüter um eine vertikale Achse drehen und schräg versetzen können.

3. Vorrichtung nach Anspruch 1 oder Anspruch 2, bei welcher das mindestens eine Formierungsband (37) zwischen einem jeweiligen Streckenabschnitt einer ersten Horizontalfördereinrichtung (10) und einer zweiten Horizontalfördereinrichtung (20) angeordnet ist und bei welcher sich ein Arbeitsbereich (14) eines eigenen Arbeitssystems (12) der ersten Horizontalfördereinrichtung (10) und ein Arbeitsbereich (24) eines eigenen Arbeitssystems (22) der zweiten Horizontalfördereinrichtung (20) im Hinblick auf die parallel zueinander orientierten Förderrichtungen (FR) zumindest bereichsweise auf gleicher Höhe befinden und sich zumindest abschnittsweise über das mindestens eine Formierungsband (37) erstrecken.

4. Vorrichtung nach Anspruch 3, bei welcher sich ein Arbeitsbereich (14) eines eigenen Arbeitssystems (12) einer ersten Horizontalfördereinrichtung (10) und ein Arbeitsbereich (24) eines eigenen Arbeitssystems (22) einer zweiten Horizontalfördereinrichtung (20) bereichsweise überschneiden.

5. Vorrichtung nach Anspruch 3 oder Anspruch 4, bei welcher sich eine dritte Horizontalfördereinrichtung (30) zwischen der ersten Horizontalfördereinrichtung (10) und der zweiten Horizontalfördereinrichtung (20) befindet, wobei eine Transportrichtung des mindestens einen Formierungsbandes (37) mit einer Förderrichtung (FR) der dritten Horizontalfördereinrichtung (30) fluchtet.

6. Vorrichtung nach Anspruch 5, bei welcher dem mindestens einen Formierungsband (37) und der dritten Horizontalfördereinrichtung (30) ein Ausrichtband (36) zwischengeordnet ist, über welches sich ein Arbeitsbereich (34) eines eigenen Arbeitssystems (32) der dritten Horizontalfördereinrichtung (30) erstreckt.

7. Vorrichtung nach einem oder mehreren der Ansprüche 1 bis 5, bei welcher das mindestens eine Formierungsband (37) an die wenigstens zwei Horizontalfördereinrichtungen (10, 20, 30, 40) in Förderrichtung (FR) direkt anschließt.

8. Vorrichtung nach einem oder mehreren der Ansprüche 1 bis 7, bei welcher mindestens ein eigenes Arbeitssystem (12, 22, 23, 42) mindestens zwei Manipulatoren (13, 17, 23, 33, 35, 43) umfasst, die in Förderrichtung (FR) hintereinander angeordnet sind und über die Steuerungseinheit (S) zur selektiven Entgegennahme, Drehen um eine vertikale Achse und schrägem Versetzen von Stückgütern der jeweiligen Horizontalfördereinrichtung (10, 20, 30, 40) miteinander in Wirkverbindung stehen.

9. Vorrichtung nach einem oder mehreren der Ansprüche 1 bis 8, bei welcher mindestens eines der eigenen Arbeitssysteme (12, 22, 23, 42) umfasst:
- einen Manipulator (13, 17, 23, 33, 35, 43), über welchen Stückgüter der jeweiligen Horizontalfördereinrichtung (10, 20, 30, 40) gedreht und schräg zur Förderrichtung (FR) versetzt werden können sowie
- eine Überschubeinheit (19, 29), mittels welcher Stückgüter schräg zur Förderrichtung (FR) versetzt und hierdurch auf dem mindestens einen Formierungsband (37) positioniert werden können,
wobei die Überschubeinheit dem Manipulator (13, 17, 23, 33, 35, 43) in Förderrichtung (FR) nachgeordnet ist.

10. Vorrichtung nach einem oder mehreren der Ansprüche 1 bis 9, umfassend
- mindestens ein dem mindestens einen Formierungsband (37) nachgeordnetes Lagenbildungsband (15) zum Transport der vordefinierten Formation, wobei eine Transportrichtung des mindestens einen Lagenbildungsbandes (15) parallel zur den Förderrichtungen (FR) der wenigstens zwei Horizontalfördereinrichtungen (10, 20, 30, 40) orientiert ist sowie
- ein oder mehrere im Bereich des mindestens einen Lagenbildungsbandes (15) positionierte Zustellelemente (8), mittels welcher zum Herstellen einer palettierfähigen Lage auf dem mindestens einen Lagenbildungsband (15) ein oder mehrerer Stückgüter der vordefinierten Formation schräg zur Transportrichtung des mindestens einen Lagenbildungsbandes (15) versetzt werden können.

11. Verfahren zum Herstellen eines definierten Lagenbildes aus mehreren Stückgütern mittels einer Vorrichtung gemäß einem der Ansprüche 1 bis 10, das Verfahren umfassend folgende Schritte:
- Transportieren von Stückgütern auf wenigstens zwei Horizontalfördereinrichtungen (10, 20, 30, 40) mit parallel zueinander orientierten Förderrichtungen (FR), wobei die wenigstens zwei Horizontalfördereinrichtungen (10, 20, 30, 40) ihre Stückgüter in Richtung eines jeweils eigenen Arbeitssystems (12, 22, 32, 42) führen,
- Selektives Entgegennehmen, Drehen und/oder schräges Versetzen der transportierten Stückgüter im Hinblick auf die parallelen Förderrichtungen (FR) durch die eigenen Arbeitssysteme (12, 22, 32, 42), wobei die mehreren Arbeitssysteme (12, 22, 32, 42) hierbei derart zusammenwirken, dass aus mehreren durch die wenigstens zwei Horizontalfördereinrichtungen (10, 20, 30, 40) transportierten Stückgütern eine vordefinierte Formation auf mindestens einem Formierungsband (37) erzeugt wird.

12. Verfahren nach Anspruch 11, bei welchem Stückgüter auf wenigstens drei Horizontalfördereinrichtungen (10, 20, 30, 40) mit parallel zueinander orientierten Förderrichtungen (FR) transportiert werden, wobei sich eine dritte (30) der mindestens drei Horizontalfördereinrichtungen (10, 20, 30, 40) zwischen einer ersten (10) und einer zweiten (20) Horizontalfördereinrichtung befindet und mittels der dritten Horizontalfördereinrichtung (30) transportierte Stückgüter zumindest anteilig ohne schräges Versetzen an das mindestens eine Lagenbildungsband (37) weitergeführt werden.

13. Verfahren nach Anspruch 11 oder Anspruch 12, bei welchem durch eine erste Horizontalfördereinrichtung (10) transportierte Stückgüter und durch eine zweite Horizontalfördereinrichtung (20) transportierte Stückgüter durch eigene Manipulatoren (12, 22) der ersten und zweiten Horizontalfördereinrichtungen (10, 20) zeitgleich entgegengenommen, um eine vertikale Achse gedreht und/oder schräg im Hinblick auf die parallelen Förderrichtungen (FR) auf das mindestens eine Formierungsband (37) versetzt werden.

14. Verfahren nach einem oder mehreren der Ansprüche 11 bis 13, bei welchem wenigstens ein eigenes Arbeitssystem (12, 22, 32, 42) mindestens einen Manipulator (13, 17, 23, 33, 35, 43) und ein oder mehrere dem mindestens einen Manipulator (13, 17, 23, 33, 35, 43) in Förderrichtung (FR) nachgeordnete Überschubeinheiten (19, 29) umfasst, wobei Stückgüter der jeweiligen Horizontalfördereinrichtung (10, 20, 30, 40) mittels des mindestens einen Manipulators (13, 17, 23, 33, 35, 43) selektiv gedreht werden und zeitlich nachfolgend mittels der ein oder mehreren Überschubeinheiten (19, 29) schräg zur Förderrichtung (FR) auf das mindestens eine Formierungsband (37) versetzt werden.

15. Verfahren nach einem oder mehreren der Ansprüche 11 bis 14, bei welchem die vordefinierte Formation an Stückgütern vom Formierungsband (37) an ein Lagenbildungsband (15) übergeben wird, auf dem Lagenbildungsband (15) ein oder mehrerer Stückgüter der vordefinierten Formation schräg zu den parallelen Förderrichtungen (FR) versetzt werden, um aus der vordefinierten Formation eine palettierfähige Lage zu bilden.

16. Verfahren nach einem oder mehreren der Ansprüche 11 bis 15, bei welchem die wenigstens zwei Horizontalfördereinrichtungen (10, 20, 30, 40) unterbrechungsfrei und vorzugsweise mit gleicher Fördergeschwindigkeit betrieben werden.

## Claims

1. An apparatus (1) used to produce a defined layer pattern from a plurality of piece goods, the apparatus comprising
- at least two horizontal conveying devices (10, 20, 30, 40), which can each transport piece goods and which have conveying directions (FR) oriented parallel to one another,
- at least one formation belt (37) disposed downstream in conveying direction from the at least two horizontal conveying devices (10, 20, 30, 40), the formation belt (37) having a transport direction that is oriented parallel to the conveying directions (FR),
- a plurality of work systems (12, 22, 32, 42), which can receive piece goods being transported via the at least two horizontal conveying devices (10, 20, 30, 40), can rotate the piece goods about a vertical axis, and can offset the piece goods diagonally to the parallel conveying directions (FR),
wherein
a) each of the at least two horizontal conveying devices (10, 20, 30, 40) has at least one own work system (12, 22, 32, 42) for receiving, rotating, and diagonal offsetting of its particular transported piece goods assigned to it, and wherein
b) the plurality of work systems (12, 22, 32, 42) are in operative connection with each other by way of a control unit (S) in order to produce a predefined formation on the at least one formation belt (37) from a plurality of piece goods by means of rotation and/or diagonal offset of said piece goods, which are being transported by way of the at least two horizontal conveying devices (10, 20, 30, 40),
**characterised in that** a working range (14) of the own work system (12) of the first horizontal conveying device (10) extends over the at least one formation belt (37), the first horizontal conveying device (10), and an alignment belt (16), which follows directly in conveying direction (FR) upon the first horizontal conveying device (10).

2. The apparatus according to claim 1, in which one or more work systems (12, 22, 32, 42) comprise one or more tripods and/or one or more manipulators (13, 17, 23, 33, 35, 43), which can in each instance rotate piece goods about a vertical axis and can diagonally offset said piece goods.

3. The apparatus according to claim 1 or claim 2, in which the at least one formation belt (37) is arranged between particular conveyor line sections of a first horizontal conveying device (10) and of a second horizontal conveying device (20), and in which a working range (14) of an own work system (12) of the first horizontal conveying device (10) and a working range (24) of an own work system (22) of the second horizontal conveying device (20) are at least in some areas arranged at the same height with regard to the conveying directions (FR) oriented parallel to one another, and extend at least in some sections over the at least one formation belt (37).

4. The apparatus according to claim 3, in which a working range (14) of an own work system (12) of a first horizontal conveying device (10) and a working range (24) of an own work system (22) of a second horizontal conveying device (20) overlap in some sections.

5. The apparatus according to claim 3 or claim 4, in which a third horizontal conveying device (30) is arranged between the first horizontal conveying device (10) and the second horizontal conveying device (20), wherein a transport direction of the at least one formation belt (37) is aligned with a conveying direction (FR) of the third horizontal conveying device (30).

6. The apparatus according to claim 5, in which an alignment belt (36) is intermediately disposed between the at least one formation belt (37) and the third horizontal conveying device (30), over which alignment belt (36) a working range (34) of an own work system (32) of the third horizontal conveying device (30) extends.

7. The apparatus according to one or more of the claims 1 to 5, in which the at least one formation belt (37) directly follows in conveying direction (FR) upon the at least two horizontal conveying devices (10, 20, 30, 40).

8. The apparatus according to one or more of the claims 1 to 7, in which at least one own work system (12, 22, 32, 42) comprises at least two manipulators (13, 17, 23, 33, 35, 43), which are arranged one after another in conveying direction (FR), and which are in operative connection with each other via the control unit (S) for the selective receiving, rotating about a vertical axis, and diagonal offsetting of piece goods from the particular horizontal conveying device (10, 20, 30, 40).

9. The apparatus according to one or more of the claims 1 to 8, in which at least one of the own work systems (12, 22, 32, 42) comprises:
- a manipulator (13, 17, 23, 33, 35, 43), by way of which piece goods from the particular horizontal conveying device (10, 20, 30, 40) can be rotated and offset diagonally to the conveying direction (FR), as well as
- a transfer unit (19, 29), by means of which piece goods can be offset diagonally to the conveying direction (FR) and hereby positioned on the at least one formation belt (37),
wherein the transfer unit is disposed downstream in conveying direction (FR) from the manipulator (13, 17, 23, 33, 35, 43).

10. The apparatus according to one or more of the claims 1 to 9, comprising
- at least one layer-forming belt (15) for the transport of the predefined formation, which layer-forming belt (15) is disposed downstream from the at least one formation belt (37), wherein a transport direction of the at least one layer-forming belt (15) is oriented parallel to the conveying directions (FR) of the at least two horizontal conveying devices (10, 20, 30, 40), as well as
- one or more advancing elements (8) positioned in the area of the at least one layer-forming belt (15), by means of which advancing elements (8) one or more piece goods of the predefined formation can be offset diagonally to the transport direction of the at least one layer-forming belt (15) in order to produce a palletizable layer on the at least one layer-forming belt (15).

11. A method used to produce a defined layer pattern from a plurality of piece goods by means of an apparatus according to one of the claims 1 to 10, the method comprising following steps:
- transporting of piece goods on at least two horizontal conveying devices (10, 20, 30, 40) with conveying directions (FR) oriented parallel to one another, wherein the at least two horizontal conveying devices (10, 20, 30, 40) guide their piece goods in each instance toward an own work system (12, 22, 32, 42),
- selective receiving, rotating, and/or diagonal offsetting of the transported piece goods with regard to the parallel conveying directions (FR) by means of the own work systems (12, 22, 32, 42), wherein the plurality of work systems (12, 22, 32, 42) in this context interact in such a manner that a predefined formation is produced on at least one formation belt (37) from a plurality of piece goods, which are being transported by the at least two horizontal conveying devices (10, 20, 30, 40).

12. The method according to claim 11, in which piece goods are transported on at least three horizontal conveying devices (10, 20, 30, 40), which have conveying directions (FR) oriented parallel to one another, wherein a third (30) of the at least three horizontal conveying devices (10, 20, 30, 40) is arranged between a first (10) and a second (20) horizontal conveying device, and wherein piece goods, which are being transported by means of the third horizontal conveying device (30), continue to be guided on to the at least one layer-forming belt (37) at least partly without being diagonally offset.

13. The method according to claim 11 or claim 12, in which piece goods being transported by a first horizontal conveying device (10) and piece goods being transported by a second horizontal conveying device (20) are received simultaneously by own manipulators (12, 22) of the first and second horizontal conveying devices (10, 20), are rotated about a vertical axis and/or are offset diagonally with regard to the parallel conveying directions (FR) onto the at least one formation belt (37).

14. The method according to one or more of the claims 11 to 13, in which at least one own work system (12, 22, 32, 42) comprises at least one manipulator (13, 17, 23, 33, 35, 43) and one or more transfer units (19, 29) disposed downstream in conveying direction (FR) from the at least one manipulator (13, 17, 23, 33, 35, 43), wherein piece goods of the particular horizontal conveying device (10, 20, 30, 40) are selectively rotated by means of the at least one manipulator (13, 17, 23, 33, 35, 43) and are temporally thereafter offset diagonally to the conveying direction (FR) onto the at least one formation belt (37) by means of the one or more transfer units (19, 29).

15. The method according to one or more of the claims 11 to 14, in which the predefined formation of piece goods is delivered from the formation belt (37) to a layer-forming belt (15), one or more piece goods of the predefined formation are offset on the layer-forming belt (15) diagonally to the parallel conveying directions (FR), in order to form a palletizable layer from the predefined formation.

16. The method according to one or more of the claims 11 to 15, in which the at least two horizontal conveying devices (10, 20, 30, 40) are operated interruption-free and preferably at the same conveying speed.

## Revendications

1. Dispositif (1) destiné à produire un motif de couches défini à partir de plusieurs produits de détail, présentant
- au moins deux dispositifs de transport horizontal (10, 20, 30, 40) qui peuvent chacun transporter des produits de détail et présentent des directions de transport (FR) orientées parallèlement les unes aux autres,
- au moins une bande de formation (37) disposée en aval desdits au moins deux dispositifs de transport horizontal (10, 20, 30, 40) dans la direction de transport (FR) et ayant une direction de transport qui est orientée parallèlement aux directions de transport (FR),
- une pluralité de systèmes de travail (12, 22, 32, 42) qui reçoivent des produits de détail transportés via lesdits au moins deux dispositifs de transport horizontal (10, 20, 30, 40), peuvent faire tourner ceux-ci autour d'un axe vertical et déplacer ceux-ci de manière oblique par rapport aux directions de transport (FR) parallèles,
dans lequel
a) à chacun desdits au moins deux dispositifs de transport horizontal (10, 20, 30, 40) est associé au moins un propre système de travail (12, 22, 32, 42) pour recevoir, faire tourner et déplacer de manière oblique les produits de détail transportés de ceux-ci, et dans lequel
b) les plusieurs systèmes de travail (12, 22, 32, 42) sont en liaison active les uns avec les autres via une unité de commande (S) afin de créer une formation prédéfinie sur ladite au moins une bande de formation (37), à partir de plusieurs produits de détail transportés par lesdits au moins deux dispositifs de transport horizontal (10, 20, 30, 40), au moyen d'une rotation et/ou d'un déplacement oblique,
**caractérisé par le fait qu'**une zone de travail (14) du propre système de travail (12) du premier dispositif de transport horizontal (10) s'étend sur ladite au moins une bande de formation (37), le premier dispositif de transport horizontal (10) et une bande d'alignement (16) qui est directement contiguë au premier dispositif de transport horizontal (10) dans la direction de transport (FR).

2. Dispositif selon la revendication 1, dans lequel un ou plusieurs systèmes de travail (12, 22, 32, 42) comprennent un ou plusieurs trépieds et/ou un ou plusieurs manipulateurs (13, 17, 23, 33, 35, 43) qui, chacun, peuvent faire tourner des produits de détail autour d'un axe vertical et déplacer ceux-ci de manière oblique.

3. Dispositif selon la revendication 1 ou la revendication 2, dans lequel ladite au moins une bande de formation (37) est disposée entre un tronçon respectif d'un premier dispositif de transport horizontal (10) et d'un deuxième dispositif de transport horizontal (20), et dans lequel une zone de travail (14) d'un propre système de travail (12) du premier dispositif de transport horizontal (10) et une zone de travail (24) d'un propre système de travail (22) du deuxième dispositif de transport horizontal (20) sont situées, au moins par zones, au même niveau en vue des directions de transport (FR) orientées parallèlement les unes aux autres, et s'étendent, au moins par sections, sur ladite au moins une bande de formation (37).

4. Dispositif selon la revendication 3, dans lequel une zone de travail (14) d'un propre système de travail (12) d'un premier dispositif de transport horizontal (10) et une zone de travail (24) d'un propre système de travail (22) d'un deuxième dispositif de transport horizontal (20) se chevauchent par zones.

5. Dispositif selon la revendication 3 ou la revendication 4, dans lequel un troisième dispositif de transport horizontal (30) est situé entre le premier dispositif de transport horizontal (10) et le deuxième dispositif de transport horizontal (20), dans lequel une direction de transport de ladite au moins une bande de formation (37) est alignée sur une direction de transport (FR) du troisième dispositif de transport horizontal (30).

6. Dispositif selon la revendication 5, dans lequel une bande d'alignement (36) est interposée entre ladite au moins une bande de formation (37) et le troisième dispositif de transport horizontal (30), et sur celle-ci s'étend une zone de travail (34) d'un propre système de travail (32) du troisième dispositif de transport horizontal (30).

7. Dispositif selon l'une ou plusieurs des revendications 1 à 5, dans lequel ladite au moins une bande de formation (37) est directement contiguë auxdits au moins deux dispositifs de transport horizontal (10, 20, 30, 40) dans la direction de transport (FR).

8. Dispositif selon l'une ou plusieurs des revendications 1 à 7, dans lequel au moins un propre système de travail (12, 22, 23, 42) comprend au moins deux manipulateurs (13, 17, 23, 33, 35, 43) qui sont disposés les uns derrière les autres dans la direction de transport (FR) et sont en liaison active les uns avec les autres via ladite unité de commande (S) pour recevoir de manière sélective des produits de détail du dispositif de transport horizontal (10, 20, 30, 40) respectif, faire tourner ceux-ci autour d'un axe vertical et déplacer ceux-ci de manière oblique.

9. Dispositif selon l'une ou plusieurs des revendications 1 à 8, dans lequel l'un au moins des propres systèmes de travail (12, 22, 23, 42) comprend:
- un manipulateur (13, 17, 23, 33, 35, 43) par l'intermédiaire duquel des produits de détail du dispositif de transport horizontal (10, 20, 30, 40) respectif peuvent être tournés et déplacés de manière oblique par rapport à la direction de transport (FR), ainsi qu'
- une unité de transfert par poussée (19, 29) au moyen de laquelle des produits de détail peuvent être déplacés de manière oblique par rapport à la direction de transport (FR) et être positionnés ainsi sur ladite au moins une bande de formation (37),
dans lequel l'unité de transfert par poussée est disposée en aval du manipulateur (13, 17, 23, 33, 35, 43) dans la direction de transport (FR).

10. Dispositif selon l'une ou plusieurs des revendications 1 à 9, comprenant
- au moins une bande de formation de couches (15) qui est disposée en aval de ladite au moins une bande de formation (37) et destinée à transporter la formation prédéfinie, dans lequel une direction de transport de ladite au moins une bande de formation de couches (15) est orientée parallèlement aux directions de transport (FR) desdits au moins deux dispositifs de transport horizontal (10, 20,. 30, 40), ainsi qu'
- un ou plusieurs éléments d'alimentation (8) qui sont positionnés au niveau de ladite au moins une bande de formation de couches (15) et au moyen desquels un ou plusieurs produits de détail de la formation prédéfinie peuvent être déplacés de manière oblique par rapport à la direction de transport de ladite au moins une bande de formation de couches (15) pour produire une couche palettisable sur ladite au moins une bande de formation de couches (15).

11. Procédé de réalisation d'un motif de couches défini à partir de plusieurs produits de détail au moyen d'un dispositif selon l'une quelconque des revendications 1 à 10, le procédé comprenant les étapes suivantes consistant à:
- transporter des produits de détail sur au moins deux dispositifs de transport horizontal (10, 20, 30, 40) ayant des directions de transport (FR) orientées parallèlement les unes aux autres, dans lequel lesdits au moins deux dispositifs de transport horizontal (10, 20, 30, 40) guident leurs produits de détail en direction d'un système de travail (12, 22, 32, 42) qui leur est respectivement propre,
- recevoir de manière sélective les produits de détail transportés, faire tourner ceux-ci et/ou déplacer ceux-ci de manière oblique par rapport aux directions de transport (FR) parallèles, par le biais des propres systèmes de travail (12, 22, 32, 42), dans lequel, ce faisant, les plusieurs systèmes de travail (12, 22, 32, 42) agissent de concert les uns avec les autres de telle sorte qu'une formation prédéfinie est générée sur au moins une bande de formation (37) à partir d'une pluralité de produits de détail transportés par lesdits au moins deux dispositifs de transport horizontal (10, 20, 30, 40).

12. Procédé selon la revendication 11, dans lequel des produits de détail sont transportés sur au moins trois dispositifs de transport horizontal (10, 20, 30, 40) ayant des directions de transport (FR) orientées parallèlement les unes aux autres, dans lequel un troisième (30) desdits au moins trois dispositifs de transport horizontal (10, 20, 30, 40) est situé entre un premier (10) et un deuxième (20) dispositif de transport horizontal, et des produits de détail transportés au moyen du troisième dispositif de transport horizontal (30) sont transférés au moins proportionnellement sans être déplacés obliquement à ladite au moins une bande de formation de couches (37).

13. Procédé selon la revendication 11 ou la revendication 12, dans lequel des produits de détail transportés par l'intermédiaire d'un premier dispositif de transport horizontal (10) et des produits de détail transportés par l'intermédiaire d'un deuxième dispositif de transport horizontal (20) sont reçues simultanément par des propres manipulateurs (12, 22) des premier et deuxième dispositifs de transport horizontal (10, 20), sont tournés par lesdits manipulateurs autour d'un axe vertical et/ou déplacés de manière oblique par rapport aux directions de transport (FR) parallèles sur ladite au moins une bande de formation (37).

14. Procédé selon l'une ou plusieurs des revendications 11 à 13, dans lequel au moins un propre système de travail (12, 22, 32, 42) comprend au moins un manipulateur (13, 17, 23, 33, 35, 43) et une ou plusieurs unité(s) de transfert par poussée (19, 29) disposée(s) en aval dudit au moins un manipulateur (13, 17, 23, 33, 35, 43) dans la direction de transport (FR), dans lequel des produits de détail du dispositif de transport horizontal (10, 20, 30, 40) respectif sont tournés sélectivement au moyen dudit au moins un manipulateur (13, 17, 23, 33, 35, 43) et, ensuite, sont déplacés de manière oblique par rapport à la direction de transport (FR), au moyen de ladite une ou desdites plusieurs unité(s) de transfert par poussée (19, 29), sur ladite au moins une bande de formation (37).

15. Procédé selon l'une ou plusieurs des revendications 11 à 14, dans lequel la formation prédéfinie de produits de détail est transférée de la bande de formation (37) à une bande de formation de couches (15); sur ladite bande de formation de couches (15), un ou plusieurs produits de détail de la formation prédéfinie est/sont déplacé(s) de manière oblique par rapport aux directions de transport (FR) parallèles afin de former une couche palettisable à partir de la formation prédéfinie.

16. Procédé selon l'une ou plusieurs des revendications 11 à 15, dans lequel on fait fonctionner sans interruption et de préférence à la même vitesse de transport lesdits au moins deux dispositifs de transport horizontal (10, 20, 30, 40).
